# FASCICULE DE BREVET EUROPEEN

(11) **EP 3 078 404 B1**
(45) Date de publication et mention de la délivrance du brevet: **01.05.2019**
(21) Numéro de dépôt: 16164682.3
(22) Date de dépôt: 11.04.2016
(51) Int. Cl.: A63K 3/04

(54) **BARRE FORMÉE D'UNE PLURALITÉ DE TRONÇONS POUR L AMÉNAGEMENT D ESPACES PUBLICS ET/OU PRIVÉS, NOTAMMENT DANS LE DOMAINE DES SPORTS**
STANGE AUS EINER VIELZAHL VON ABSCHNITTEN FÜR DIE AUSSTATTUNG VON ÖFFENTLICHEN UND/ODER PRIVATEN BEREICHEN, INSBESONDERE FÜR DEN SPORT
BAR MADE UP OF A PLURALITY OF SECTIONS FOR LAYING OUT PUBLIC AND/OR PRIVATE SPACES, PARTICULARLY IN THE FIELD OF SPORT

(30) Priorité: 10.04.2015 FR 1553119
(43) Date de publication de la demande: 12.10.2016
(73) Titulaire: Anais France, 01430 Peyriat (FR)
(72) Inventeur: VANOTTI, Frédéric, 01430 PEYRIAT (FR)
(74) Mandataire: Verriest, Philippe

(56) Documents cités:
- CH-A5- 667 997
- GB-A- 2 222 956

## Description

La présente invention se rapporte à une barre formée d'une pluralité de tronçons, pour l'aménagement d'espaces publics et/ou privés. Plus particulièrement, ces barres peuvent par exemple être utilisées dans le domaine de l'aménagement urbain et/ou l'aménagement de propriété privée. Ces barres peuvent également être utilisées dans le domaine de la signalétique. Elles peuvent en outre être utilisées dans le domaine des sports et plus particulièrement dans le domaine de l'équitation.

Actuellement les barres utilisées sont généralement formée d'une seule pièce. Ces barres sont donc lourdes et encombrantes. Ainsi, leur transport par unité manuellement ou par cargaison lors d'une livraison présente des difficultés.

En outre, par exemple dans le domaine des sports ou de l'aménagement des espaces publics ou privés, les barres utilisées sont généralement en bois

L'utilisation du bois entraîne des contraintes en termes de sécurité des personnes, de logistique et d'entretien.

En effet, des barres de bois peuvent présenter des échardes et ainsi un risque de blessure, d'autant plus si la barre de bois se rompt par accident. En outre, ce matériau ne permet pas l'amortissement des chocs.

En outre, ces barres, étant utilisées généralement en extérieur, se détériorent et se putréfient rapidement ce qui facilite leur rupture en cas de chocs.

Il est fréquent dans le domaine des sports et plus particulièrement dans le domaine de l'équitation que les barres soient peintes dans le but de les décorer et d'apposer des logos publicitaires ou des logos de sponsors.

La peinture de ces barres implique un entretien régulier, qui nécessite de la main d'oeuvre et de la peinture souvent nocive pour l'environnement. La technique de peinture présente en outre l'inconvénient d'un choix de motifs réalisables limités.

Il est également connu de l'art antérieur d'utiliser des barres en matières plastiques. Malgré l'intérêt de ce matériau pour améliorer la sécurité et l'entretien, ces barres restent souvent trop lourdes et trop chères à réaliser.

Le document GB2222956 divulgue un tronçon de barre selon le préambule de la revendication 1.

La présente invention à pour but de résoudre tout ou partie des inconvénients mentionnés ci-dessus.

Á cet effet, la présente invention concerne un tronçon de barre selon la revendication 1.

Selon un aspect de l'invention, le tronçon de barre comprend une surface extérieure, la surface extérieure du tronçon et la surface extérieure d'un tronçon adjacent étant continues.

Selon un aspect de l'invention, la portion principale comprend une première extrémité et une deuxième extrémité, la première extrémité coopérant avec la première portion d'extrémité, la deuxième portion d'extrémité s'étendant à partir de la deuxième extrémité de la portion principale et présentant au moins une section inférieure à une section de la portion principale, une section de la deuxième extrémité de la portion principale étant identique à une section de l'extrémité de la première portion d'extrémité.

Selon un aspect de l'invention, au moins une section de la deuxième portion d'extrémité est inférieure ou égale à au moins une section de la portion principale.

Selon un aspect de l'invention, au moins une section de la première portion d'extrémité est supérieure ou égale à au moins une section la plus grande de la deuxième portion d'extrémité.

Grâce aux dispositions selon l'invention, le tronçon est léger et facilement transportable, autant en quantité par exemple lors d'une livraison, que par unité par un opérateur. En outre, la section de la première portion d'extrémité et la portion de la portion principale étant continue, les risques de blessure des personnes sont diminués. De plus, lors de l'assemblage de plusieurs tronçons, la section sera continue sur la totalité de l'ensemble de tronçons, ce qui améliorera également la sécurité des personnes.

Selon un aspect de l'invention, le tronçon de barre comprend un corps creux. Grâce à ces dispositions, le tronçon présente une légèreté qui facilite son transport.

Selon un aspect de l'invention, le deuxième élément d'assemblage est configuré pour coopérer avec un élément d'assemblage similaire au premier élément d'assemblage par complémentarité de forme.

Grâce à ces dispositions, les tronçons peuvent être assemblés rapidement et facilement.

Selon un aspect de l'invention, les premier et deuxième éléments d'assemblage comprennent un filetage ou un taraudage.

Selon un aspect de l'invention, la partie de maintien comprend un filetage ou un taraudage.

Selon un aspect de l'invention, le deuxième élément d'assemblage est configuré pour coopérer avec un élément d'assemblage similaire au premier élément d'assemblage par vissage.

Selon un aspect de l'invention, le deuxième élément d'assemblage est configuré pour coopérer avec un élément d'assemblage similaire au premier élément d'assemblage par clipage.

Selon un aspect de l'invention, le deuxième élément d'assemblage est configuré pour coopérer avec un élément d'assemblage similaire au premier élément d'assemblage par emboîtage.

Selon un aspect de l'invention, le deuxième élément d'assemblage est configuré pour coopérer avec un élément d'assemblage similaire au premier élément d'assemblage par une fixation de type baïonnette.

Selon un aspect de l'invention, la section de la portion principale et la section de la première portion d'extrémité sont constantes.

Ainsi, lors de l'assemblage, il sera possible de réaliser des barres rectilignes.

Selon un aspect de l'invention, la portion principale du tronçon est de section circulaire ou de section polygonale.

Selon un aspect de l'invention, la première portion d'extrémité du tronçon est de section circulaire.

Selon un aspect de l'invention, la portion principale du tronçon est cylindrique par exemple à base circulaire ou polygonale.

Selon un aspect de l'invention, le tronçon de barre est en matière plastique.

Selon un aspect de l'invention, le tronçon de barre est en matériau composite comprenant une matrice en matière plastique.

Grâce à ces dispositions, l'entretien du tronçon est facilité, il ne se détériore pas en extérieur. En outre, il est possible de le décorer ou d'y apposer des logos de manière définitive. De plus, l'utilisation de ce matériau permet une grande précision des motifs et logos.

Selon un aspect de l'invention, le tronçon de barre est en matériau composite comprenant des fibres en bois, en métal ou en verre.

Selon un aspect de l'invention, le tronçon de barre comprend des fibres de verre.

Selon un aspect de l'invention, le tronçon de barre est en bois ou en métal.

Selon un aspect de l'invention, le tronçon de barre comprend un volume intérieur moussé.

Grâce à ces dispositions, les chocs sont amortis, et la sécurité des personnes est améliorée.

Selon un aspect de l'invention, le tronçon de barre comprend un élément rigidifiant de renforcement.

Grâce aux dispositions selon l'invention, le tronçon peut être renforcé en fonction des nécessités des différentes utilisations des barres.

Selon un aspect de l'invention, l'élément rigidifiant de renforcement comprend un élément métallique ou plastique.

Selon un aspect de l'invention, l'élément rigidifiant comprend un tube métallique disposé dans le corps creux du tronçon.

Selon un aspect de l'invention, l'élément rigidifiant comprend des godrons disposés au niveau de la surface extérieure du tronçon.

Selon un aspect de l'invention, les godrons sont métalliques ou plastiques.

La présente invention se rapporte en outre à une barre pour l'aménagement d'espaces publics et/ou privés, notamment dans le domaine des sports, comprenant au moins un premier tronçon de barre et un deuxième tronçon de barre conformes à l'une quelconque des caractéristiques susmentionnées, le premier élément d'assemblage du premier tronçon de barre coopérant avec le deuxième élément d'assemblage du deuxième tronçon de barre.

Selon un aspect de l'invention, la surface extérieure des premier et deuxième tronçons est continue au niveau de la zone d'assemblage.

Selon un aspect de l'invention, la surface extérieure des premier et deuxième tronçons est constante au niveau de la zone d'assemblage.

Grâce aux dispositions selon l'invention, la barre est de longueur variable en fonction du nombre de tronçons assemblés, et permet ainsi de s'adapter aux différentes exigences des utilisations de la barre.

D'autres caractéristiques et avantages de la présente invention apparaîtront à la lumière de la description qui va suivre et à l'examen des figures ci-annexées, dans lesquelles :
- la figure 1 représente un tronçon de barre pour l'aménagement d'espaces publics et/ou privés, notamment dans le domaine des sports ;
- la figure 2 représente une coupe longitudinale d'un tronçon de barre ;
- la figure 3 représente une coupe transversale d'une deuxième portion d'extrémité d'un tronçon de barre ;
- la figure 4 représente un assemblage de tronçons de barre.

Sur l'ensemble de ces figures, des références identiques ou analogues désignent des organes ou ensembles d'organes identiques ou analogues.

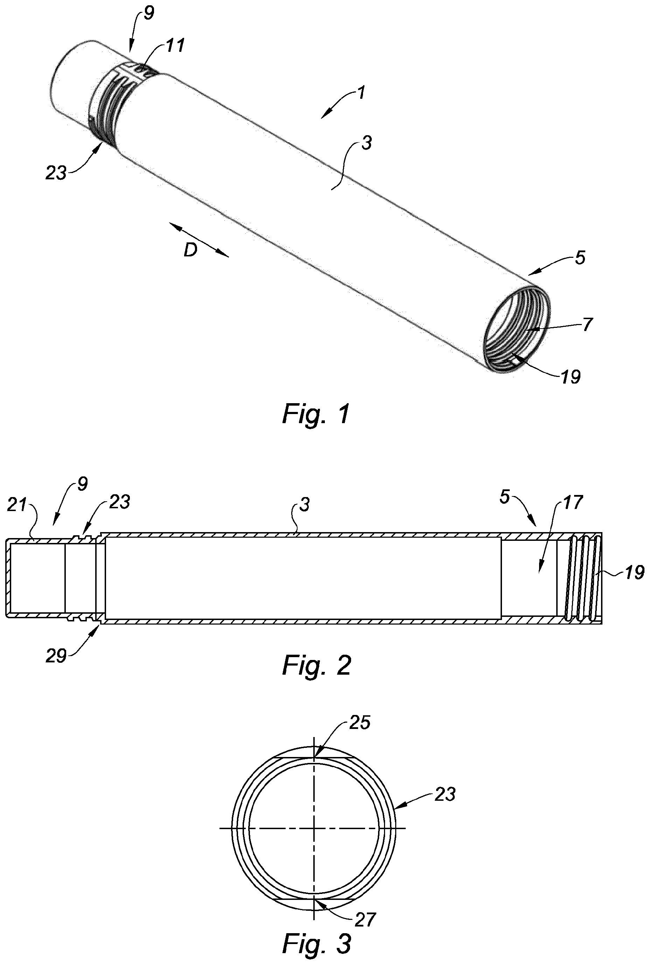

Les figures 1, 2 et 3 représentent un tronçon 1 selon l'invention.

Le tronçon 1 est de forme allongée et s'étend selon une direction d'extension D.

Le tronçon 1 comprend une portion principale 3 d'une surface extérieure SE déterminée. La surface extérieure est, dans ce mode de réalisation circulaire, et a un diamètre extérieur compris entre 80 et 100 millimètres, et préférentiellement de 90 millimètres.

Le tronçon 1 comprend en outre une première portion d'extrémité 5 comprenant un premier élément d'assemblage 7.

Le tronçon 1 comprend également une deuxième portion d'extrémité 9 comprenant un deuxième élément d'assemblage 11, configuré pour coopérer par complémentarité avec un élément d'assemblage similaire au premier élément d'assemblage 7 de la première portion d'extrémité 5.

La surface extérieure de la première portion d'extrémité 5 est continue par rapport à la surface extérieure de la portion principale 3.

Plus particulièrement, la surface extérieure de la première portion d'extrémité 5 et la surface extérieure de la portion principale 3 sont identiques et constantes.

Lors de l'assemblage, il sera possible de réaliser des barres rectilignes.

Le tronçon 1 peut avoir différentes longueurs totales qui permettent à un opérateur de le transporter facilement. Par exemple, le tronçon 1 peut avoir une longueur totale comprise entre 500 millimètres et 700 millimètres, et préférentiellement de 595 millimètres. Ainsi, le tronçon 1 est facilement transportable manuellement ou par livraison.

Dans ce mode de réalisation, la portion principale 3 a une longueur comprise entre 400 et 600 millimètres et préférentiellement de 500 millimètres. La deuxième portion d'extrémité 9 a une longueur comprise entre 50 et 150 millimètres et préférentiellement de 95 millimètres.

En outre, la surface extérieure de la première portion d'extrémité et la surface extérieure de la portion principale étant continue, les risques de blessure pour les personnes ou les chevaux dans le domaine de l'équitation sont diminués.

De plus, dans ce mode de réalisation, la portion principale 3, la première portion d'extrémité 5 et la deuxième portion d'extrémité 9 sont venues de matière.

Lors de l'assemblage de plusieurs tronçons, la section sera continue sur la totalité de l'ensemble de tronçons, ce qui améliorera également la sécurité des chevaux dans le domaine de l'équitation par exemple.

Le tronçon 1 comprend un corps creux et présente une légèreté qui facilite également son transport.

Le deuxième élément d'assemblage 11 est configuré pour coopérer avec un élément d'assemblage similaire au premier élément d'assemblage 7 par complémentarité de forme. Ainsi, les tronçons 1 peuvent être assemblés rapidement et facilement. L'assemblage des éléments d'assemblage 7, 11 complémentaires permet d'obtenir une surface extérieure de l'assemblage continue par rapport à la surface extérieure de la portion principale 3.

La section de la deuxième portion d'extrémité 9 est inférieure à la section de la portion principale 3.

Selon ce mode de réalisation, le premier élément d'assemblage 7 comprend une partie de support lisse, formée par un logement de réception 17 et une partie de maintien taraudée 19. Le deuxième élément d'assemblage comprend une partie de support lisse 21, apte à s'insérer dans le logement de réception 17. Le deuxième élément d'assemblage comprend en outre une partie de maintien filetée 23, apte à coopérer avec la partie de maintien taraudée 19.

Ainsi, le deuxième élément d'assemblage 11 est configuré pour coopérer avec un élément d'assemblage similaire au premier élément d'assemblage 7 par vissage.

La partie de maintien filetée 23 du deuxième élément d'assemblage comprend deux zones lisses 25, 27 opposée, permettant un vissage plus rapide.

Selon un autre mode de réalisation, le filetage est continu sur toute la circonférence de la partie de maintien 23.

Le tronçon présente un épaulement 29 entre la portion principale et la deuxième portion d'extrémité. Lorsque le tronçon 1, appelé premier tronçon, est assemblé à un deuxième tronçon 1', l'extrémité de la première portion d'extrémité 5' du deuxième tronçon 1' vient en butée contre l'épaulement 29. La continuité de la barre 10 ainsi formée est donc assurée.

Dans ce mode de réalisation, le tronçon 1 de barre est en matière plastique. L'entretien du tronçon 1 est ainsi facilité, il ne se détériore pas en extérieur. En outre, il est possible de le décorer ou d'y apposer des logos de manière définitive. De plus, l'utilisation de ce matériau permet une grande précision des motifs et logos.

Selon un mode de réalisation, le tronçon 1 comprend un volume intérieur moussé. Ainsi, les chocs et les bruits sont amortis.

Selon un mode de réalisation, le tronçon de barre peut également comprendre un élément rigidifiant de renforcement, en fonction des nécessités des différents exercices équestres.

L'élément rigidifiant de renforcement est un élément métallique, par exemple un tube métallique disposé et fixe dans le corps creux du tronçon 1.

Selon une alternative, l'élément rigidifiant de renforcement comprend des godrons disposés au niveau de la surface extérieure du tronçon 1. Les godrons sont métalliques ou plastiques. Les godrons peuvent constituer seuls l'élément rigidifiant de renforcement. L'élément rigidifiant de renforcement peut également être constitué des godrons et du tube métallique.

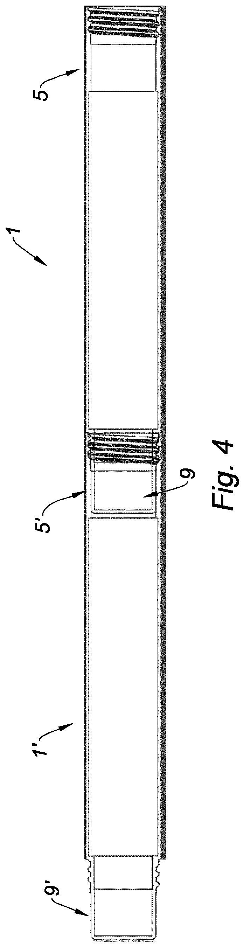

La figure 4 représente une barre 10 d'exercice équestre comprenant un premier tronçon 1 et un deuxième tronçon 1' assemblés. Le premier élément d'assemblage 7 du premier tronçon 1 de barre coopère avec le deuxième élément d'assemblage 11' du deuxième tronçon 1'.

Les tronçons 1 et 1' sont assemblés au niveau d'une zone d'assemblage 15. La surface extérieure de la zone d'assemblage est continue et lisse.

Une fois assemblés, les tronçons 1, 1' ont une longueur utile comprise entre 400 et 600 millimètres et préférentiellement de 500 millimètres, correspondant à la longueur de la portion principale 3.

Ainsi, les risques de blessures des personnes ou des chevaux dans le domaine de l'équitation est réduite.

Selon différents modes de réalisation, la barre 10 peut être formée d'un nombre quelconque de tronçons. La longueur de la barre 10 est donc variable en fonction du nombre de tronçons assemblés, ce qui permet de s'adapter aux différentes exigences des utilisations de cette barre 10.

Selon une alternative, les premier et deuxième tronçons 1, 1' pourraient être configurés pour coopérer par clipage.

Selon une autre alternative, les premier et deuxième tronçons 1, 1' pourraient être configurés pour coopérer par emboîtage.

Selon une autre alternative, les premier et deuxième tronçons 1, 1' pourraient être configurés pour coopérer par une fixation de type baïonnette.

Bien entendu, la présente invention ne se limite pas aux modes de réalisation décrits et représentés, fournis à titre d'exemples illustratifs et non limitatifs.

## Revendications

1. Tronçon de barre pour l'aménagement d'espaces publics et/ou privés, notamment dans le domaine des sports, le tronçon (1) s'étendant selon une direction d'extension (D) et comprenant :
- une portion principale (3) ;
- une première portion d'extrémité (5) comprenant un premier élément d'assemblage (7) ;
- une deuxième portion d'extrémité (9) comprenant un deuxième élément d'assemblage (11), complémentaire du premier élément d'assemblage (7) de la première portion d'extrémité (5),
la première ou la deuxième portion d'extrémité (5, 9) étant agencée pour coopérer avec un tronçon adjacent au niveau d'une zone d'assemblage,
les premier et deuxième éléments d'assemblage (7, 11) comprenant chacun une partie de support (17, 21) et une partie de maintien (19, 23), **caractérisé en ce que** la portion principale (3), la première portion d'extrémité (5) et la deuxième portion d'extrémité (9) sont venues de matière.

2. Tronçon de barre selon la revendication 1, comprenant une surface extérieure, la surface extérieure du tronçon (1) et la surface extérieur d'un tronçon adjacent étant continues.

3. Tronçon de barre selon l'une des revendications 1 ou 2, dans lequel la portion principale (3) comprend une première extrémité et une deuxième extrémité opposées, la première extrémité coopérant avec la première portion d'extrémité (5), la deuxième portion d'extrémité (9) s'étendant à partir de la deuxième extrémité de la portion principale (3) et présentant au moins une section inférieure à une section de la portion principale (3), une section de la deuxième extrémité de la portion principale (3) étant identique à une section de l'extrémité de la première portion d'extrémité (5).

4. Tronçon de barre selon l'une des revendications précédentes, comprenant un corps creux.

5. Tronçon de barre selon l'une des revendications précédentes, dans lequel les premier et deuxième éléments d'assemblage (7, 11) comprennent un filetage ou un taraudage.

6. Tronçon de barre selon l'une des revendications précédentes, étant en matière plastique.

7. Tronçon de barre selon l'une des revendications précédentes, comprenant une surface intérieure moussée.

8. Tronçon de barre selon l'une des revendications précédentes, comprenant un élément rigidifiant de renforcement.

9. Barre pour l'aménagement d'espaces publics et/ou privés, notamment dans le domaine des sports, comprenant au moins un premier tronçon (1) de barre et un deuxième tronçon (1') de barre conformes à l'une quelconque des revendications précédentes, le premier élément d'assemblage (7) du premier tronçon (1) de barre coopérant avec le deuxième élément d'assemblage (11') du deuxième tronçon (1') de barre.

## Patentansprüche

1. Teilstück einer Stange zur Ausstattung von öffentlichen und/oder privaten Räumen, insbesondere im Sportbereich, wobei sich das Teilstück (1) in eine Erstreckungsrichtung (D) erstreckt und umfasst:
- einen Hauptabschnitt (3);
- einen ersten Endabschnitt (5), der ein erstes Verbindungselement (7) umfasst;
- einen zweiten Endabschnitt (9), der ein zweites Verbindungselement (11) umfasst, das zum ersten Verbindungselement (7) des ersten Endabschnitts (5) komplementär ist,
wobei der erste oder der zweite Endabschnitt (5, 9) dafür eingerichtet ist, im Bereich einer Verbindungszone mit einem angrenzenden Teilstück zusammenzuwirken,
wobei das erste und zweite Verbindungselement (7, 11) jedes einen Stützteil (17, 21) und einen Halteteil (19, 23) umfassen, **dadurch gekennzeichnet, dass** der Hauptabschnitt (3), der erste Endabschnitt (5) und der zweite Endabschnitt (9) einstückig sind.

2. Stangenteilstück nach Anspruch 1, das eine Außenfläche umfasst, wobei die Außenfläche des Teilstücks (1) und die Außenfläche eines angrenzenden Teilstücks durchgängig sind.

3. Stangenteilstück nach einem der Ansprüche 1 oder 2, wobei der Hauptabschnitt (3) ein erstes Ende und ein gegenüberliegendes zweites Ende umfasst, wobei das erste Ende mit dem ersten Endabschnitt (5) zusammenwirkt, wobei sich der zweite Endabschnitt (9) vom zweiten Ende des Hauptabschnitts (3) aus erstreckt und mindestens einen Querschnitt aufweist, der kleiner ist als ein Querschnitt des Hauptabschnitts (3), wobei ein Querschnitt des zweiten Endes des Hauptabschnitts (3) mit einem Querschnitt des Endes des ersten Endabschnitts (5) identisch ist.

4. Stangenteilstück nach einem der vorstehenden Ansprüche, das einen hohlen Körper umfasst.

5. Stangenteilstück nach einem der vorstehenden Ansprüche, wobei das erste und zweite Verbindungselement (7, 11) ein Außengewinde oder ein Innengewinde umfassen.

6. Stangenteilstück nach einem der vorstehenden Ansprüche, das aus Kunststoffmaterial ist.

7. Stangenteilstück nach einem der vorstehenden Ansprüche, das eine geschäumte Innenfläche umfasst.

8. Stangenteilstück nach einem der vorstehenden Ansprüche, das ein versteifendes Verstärkungselement umfasst.

9. Stange zur Ausstattung von öffentlichen und/oder privaten Räumen, insbesondere im Sportbereich, die mindestens ein erstes Stangenteilstück (1) und ein zweites Stangenteilstück (1') nach einem der vorstehenden Ansprüche umfasst, wobei das erste Verbindungselement (7) des ersten Stangenteilstücks (1) mit dem zweiten Verbindungselement (11') des zweiten Stangenteilstücks (1') zusammenwirkt.

## Claims

1. A bar segment for laying out public and/or private spaces, in particular in the sporting field, the segment (1) extending in a direction of extension (D) and comprising:
- a main portion (3);
- a first end portion (5) comprising a first assembly element (7);
- a second end portion (9) comprising a second assembly element (11), complementary to the first assembly element (7) of the first end portion (5),
the first or the second end portion (5,9) being arranged to cooperate with an adjacent segment at an assembly area,
each of the first and second assembly elements (7, 11) comprising a support portion (17, 21) and a holding portion (19, 23), **characterized in that** the main portion (3), the first end portion (5) and the second end portion (9) are integrally made in one piece.

2. The bar segment according to claim 1, comprising an external surface, the external surface of the segment (1) and the external surface of an adjacent segment being continuous.

3. The bar segment according to any of claims 1 or 2, wherein the main portion (3) comprises opposite first end and second end, the first end cooperating with the first end portion (5), the second end portion (9) extending from the second end of the main portion (3) and having at least one section beneath a section of the main portion (3), a section of the second end of the main portion (3) being identical to a section of the end of the first end portion (5).

4. The bar segment according to any of the preceding claims, comprising a hollow body.

5. The bar segment according to any of the preceding claims, wherein the first and second assembly elements (7, 11) comprise a tapping or a thread.

6. The bar segment according to any of the preceding claims, being made of a plastic material.

7. The bar segment according to any of the preceding claims, comprising a foamed internal surface.

8. The bar segment according to any of the preceding claims, comprising a reinforcing stiffening element.

9. A bar for laying out public and/or private spaces, in particular in the sporting field, comprising at least a first bar segment (1) and a second bar segment (1') in accordance with any one of the preceding claims, the first assembly element (7) of the first bar segment (1) cooperating with the second assembly element (11') of the second bar segment (1').
